# EUROPEAN PATENT APPLICATION

(11) **EP 3 858 475 A1**
(43) Date of publication of application: **04.08.2021**
(21) Application number: 20464001.5
(22) Date of filing: 30.01.2020
(51) Int. Cl.: B01J 19/18, B01J 19/26, B01J 19/24

(54) **REACTOR FOR OBTAINING EFFICIENT FUELS**

(71) Applicant: Ienciu Mircea, Cluj (RO)
(72) Inventor: Ienciu, Mircea, Cluj (RO); Faur, UCU-Mihai, Cluj (RO); Kocher, Johann, 36037 Fulda (DE); Isert, Hugo, Berlin (DE); Saal, Rene, Dermbach (DE); Laci, Sandor Istvan, Halasztelek (HU)
(74) Representative: Bozocea, Gina Violeta

(57) **Abstract**

Reactor aimed at obtaining an efficient fuel through processing micrometric spheres (ivo spheres) that contain argon encapsulated in a film made of liquid hydrocarbons + surfactant. The raw material the spheres are processed from contains the entire range of hydrocarbons, fossils, biofuels or e-fuels.

According to the patent, the reactor contains a micrometric sphere processing cell, an injector (2) with electromagnet for spraying hydrocarbons + surfactant, an impulse generator (3), an argon/compressed air admission valve (4), an electric engine (5) for operating the injection system with common ramp and related operations, an injection pump (6), an electric panel for process administration (7), a buffer tank for the hydrocarbon + surfactant mix (8), a common ramp for 5 processing modules (9), a tube with helical grooves (10), as well as a micrometric sphere evacuation tube (11).

## Description

Our invention refers to a device, i.e. a reactor for obtaining an efficient fuel for the processing of micrometric spheres that contain argon encapsulated in a film made of liquid hydrocarbons + surfactant. The raw material the spheres are processed from contains the entire range of hydrocarbons, fossils, biofuels or e-fuels. That is why, an apparently simple method makes the transition from fuels to the class of efficient fuels with hydrocarbon fractions.

We would like to emphasise that current fuel structure optimisation is based on 4 pillars.

The first pillar. Since patent application no. 2011 01380, we have a procedure for obtaining a fuel mixture that consists of the separate preparation of sonicated fluid made up of water containing added nano aluminium powder and glycerine, as well as a mixture of lipophilic and hydrophilic emulsifiers and adding by dripping under agitation the two liquids to 46,4...57,4% fuel or biofuel, of which a stable fuel mixture is obtained.

The second pillar represents the fundamental phase. It was then that the technological leap aiming excellence was discovered. Its essence is that it imitates the complex functioning of human organisms. In this respect we invoke the "energetic carrier" role that red blood cells and micrometrical spheres play.

Specifically, the argon encapsulated in demineralised water spheres is transported into the internal combustion engine room. In this place, combustion processes are exponentially intensified and therefore mobility is achieved. Consequently, the transition of the public transport sector to efficient fuels creates the premises for an abrupt reduction of specific consumption and the implementation of an environmentally friendly product.

The technical problem our invention solves consists of processing micrometric spheres that emanate thermal peaks of thousands of degrees and implicitly high pressure and transition to efficient fuels with hydrocarbon fractions, fossils, biofuels or synthetic fuels.

The aim of our reactor is to obtain an efficient fuel and it is made up of a micrometric sphere processing cell, connected by means of a tube with helical grooves to a sputtering injector of hydrocarbon + surfactant deposited in a buffer tank and to an impulse generator, an argon/compressed air admission valve is connected to a micrometric sphere evacuation tube, where the injection system is operated by an electric engine, an injection pump and an electric panel, while the common ramp contains five processing modules.

The advantages this invention brings are the following:
- obtaining efficient fuels that contain fractions of fossil fuels, biofuels, synthetic fuels and added surfactant.
- it emanates thermal peaks of thousands of Celsius degrees, cumulated with high pressure.
- it reduces CO2 and NOx emissions into the atmosphere.

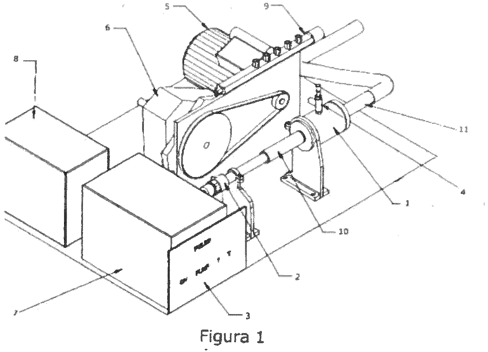

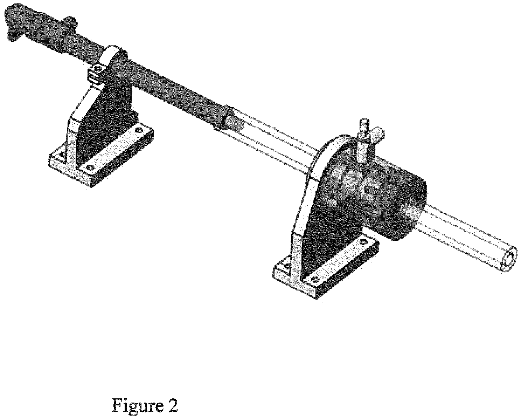

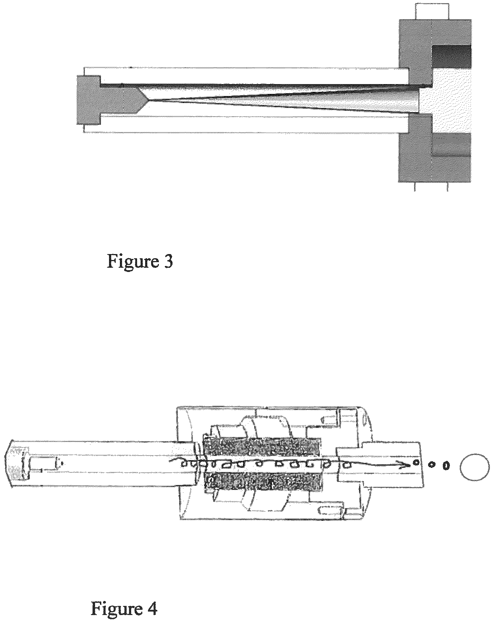

In the following, we present an example of accomplishing our invention, also in connection with figures 1-5 which represent:
Figure 1: The building scheme of the reactor
Figure 2: The building scheme of a Standard module for sphere processing
Figure 3: Details of the two elements that initiate the formation of the thin hydrocarbon + surfactant film, on the interior interface of the empty cylindrical ceramic filter with micrometric porosity.
Figure 4: Schematic representation of the cell where micrometric spheres are rhythmically formed.

According to the patent, the reactor contains a micrometric sphere processing cell, an injector 2 with electromagnet for spraying hydrocarbons + surfactant, an impulse generator 3, an argon/compressed air admission valve 4, an electric engine 5 for operating the injection system with common ramp and related operations, an injection pump 6.

The process is administered from an electric panel 7. A buffer tank 8 for the hydrocarbon + surfactant mix, a common ramp 9 for 5 processing modules, a tube with helical grooves 10, as well as a micrometric sphere evacuation tube 11 on the interior interface of the empty cylindrical ceramic filter with micrometric porosity.

The device contains an injector with 4 holes for conical sputtering and an empty cylindrical ceramic filter with micrometric porosity.

Each pulsation of the injector processes several micrometric spheres. The "cascade effect" is achieved through rhythmical pulsations of the injector by means of hydraulic shocks that push the demineralised water spheres. This is how a sample of randomised fuel with fractions (percentages) of micrometric spheres, also called ivo spheres, is obtained.

The third pillar. The operating principle of the device is simple if we refer to the formation of soap bubbles. Thus, at a certain moment, the injector sputters o dose of hydrocarbon + surfactant to the interior wall of the ceramic filter. Consequently, the centrifugal force will form a thin liquid film on the entire surface of the interior diameter. Then, an argon puff is sprayed from the exterior diameter to the interior diameter. We would like to emphasise that the argon/thin liquid film interface is an ad litteram application of the 3^{rd} principle of mechanics (Newton's 3^{rd} law). In this case, the pressure of argon acts on the thin hydrocarbon + surfactant film from one side, while the thin liquid film reacts with a reaction force of the same intensity, but from the opposite side.

Thus, a superficial tension is generated by the force of attraction between molecules, which shapes the thin film into an almost spherical form given that the general characteristic of liquids is that they take up a minimum geometrical form due to cohesion between the molecules. And, as already known, spheres have the smallest surface area/volume ratio. In short, a dose + a puff = micrometric spheres (ivo spheres).

We would like to mention that the surfactant has a stabilising effect on the spheres according to the Marangoni effect. In the same vein, we would like to indicate some other characteristics of the surfactant. For example, it makes two spheres reject each other. This explains why the spheres are intact when they get into the water matrix as a result of numerous water hammer pulses generated by the injector. This is how the neutral buoyancy of the spheres in the demineralised water matrix is explained. The fourth pillar. But micrometric spheres have one more specific strength: their interior pressure is colossal, of approximately 39 900 atmospheres, which is familiar to specialists in metallurgy. The aspect has its utility if we take into consideration that the new fuel shall have endurance to several transfers.

## Claims

1. Reactor aimed at obtaining an efficient fuel **characterised by** consisting of a micrometric sphere processing cell (1), connected by means of a tube (10) with helical grooves to a sputtering injector (2) of hydrocarbon + surfactant deposited in a buffer tank (8) and to an impulse generator (3), an argon/compressed air admission valve (4) is connected to a micrometric sphere evacuation tube (11), where the injection system is operated by an electric engine (5), an injection pump (6) and an electric panel (7), while the common ramp contains five processing modules (9).

## Amended claims

### Amended claims in accordance with Rule 137(2) EPC.

1. Reactor aimed at obtaining an efficient fuel **characterized by** the fact that it consists of one or more processing cells (1) provided with an argon admission valve (10) on the outside, connected to a common ramp (9) and connected or not connected to each other. The processing of spheres is created by an electric engine (5) aimed at operating the injection system and for related operations, an injection pump (6), a pressure line of 1200 bars with a manometer (no figure) that allows the electric control of the injection, a buffer tank (8) for the hydrocarbons mix with surfactant. The process is operated from an electric panel (7) and a processing cell (1) consists of an impulse generator under the form of an electromagnetic injector (2) for spraying hydrocarbons with surfactant, a fuel admission tube under pressure (3) with helical grooves and an empty cylindrical ceramic filter (4) with micrometric porosity, and due to the centrifugal force the admission tube (3) with helical grooves makes the liquid mix rotate so that micrometric spheres are formed on the interior interface of the ceramic filter (4) and they are eliminated through an evacuation tube (11).
